# FASCICULE DE BREVET EUROPEEN

(11) **EP 2 932 177 B1**
(45) Date de publication et mention de la délivrance du brevet: **06.09.2017**
(21) Numéro de dépôt: 13711091.2
(22) Date de dépôt: 05.03.2013
(51) Int. Cl.: F25J 3/02, B01D 53/00

(54) **PROCÉDÉ ET APPAREIL DE SÉPARATION D'UN MÉLANGE CONTENANT DU DIOXYDE DE CARBONE PAR DISTILLATION**
VERFAHREN UND VORRICHTUNG ZUR TRENNUNG EINER KOHLENDIOXIDHALTIGEN MISCHUNG MITTELS DESTILLATION
METHOD AND DEVICE FOR SEPARATING A MIXTURE CONTAINING CARBON DIOXIDE BY MEANS OF DISTILLATION

(30) Priorité: 13.03.2012 FR 1252251
(43) Date de publication de la demande: 21.10.2015
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); DARDE, Arthur, F-75005 Paris (FR); LOCKWOOD, Frederick, F-75010 Paris (FR); TRAVERSAC, Xavier, F-75012 Paris (FR)
(74) Mandataire: Mercey, Fiona Susan
(86) Numéro de dépôt international: PCT/FR2013/050462
(87) Numéro de publication internationale: WO 2013/135993

(56) Documents cités:
- EP-A1- 2 381 198
- FR-A1- 2 926 876
- US-A- 4 441 900
- US-A1- 2008 196 584
- US-A1- 2009 013 717
- US-A1- 2011 023 539

## Description

La présente invention concerne un procédé et appareil de séparation d'un mélange contenant du dioxyde de carbone par distillation comprenant une étape d'élimination de NOₓ.

Il est connu de séparer un mélange contenant du dioxyde de carbone comme un des composants principaux par distillation. Tous les pourcentages concernant des puretés sont des pourcentages molaires.

Le mélange peut comprendre au moins 50% de dioxyde de carbone, voire au moins 70% de dioxyde de carbone, et même au moins 90% de dioxyde de carbone. Le restant du gaz peut comprendre au moins un des gaz suivants : de l'azote, de l'oxygène, de l'argon, de l'hydrogène. Le mélange peut provenir d'un procédé d'oxycombustion dans lequel un mélange d'oxygène et de carburant brûle dans une chaudière pour produire un gaz résiduaire, dont le mélange à séparer de l'invention constitue au moins une partie, produite après épuration.

Un fluide riche en dioxyde de carbone peut comprendre au moins 80% de dioxyde de carbone, voire au moins 95% de dioxyde de carbone.

La plupart des procédés de ce genre utilisant de la distillation pour purifier le mélange utilisent une colonne de distillation dont la cuve est chauffée par le mélange à distiller.

Dans le cas de US-A-3498067, DE-A-3639779 et JP-A-56077673 le mélange est envoyé dans la colonne et pour les documents FR-A-2934170, EP-A-1953486, US20020059807, US-A-3130026, WO2006054008, WO2007126972, EP-A-0965564, EP-A-0994318 le liquide de cuve se vaporise contre le mélange dans un échangeur dédié, séparé d'un autre échangeur plus grand qui sert à refroidir le mélange.

US-A-4441900 et US 2008/196584 A1 décrivent un procédé et un appareil selon le préambule des revendications 1 et 4 respectivement. Selon l'invention, il est prévu un procédé de séparation d'un gaz contenant du dioxyde de carbone par distillation selon la revendication 1. Selon d'autres caractéristiques facultatives :
- on mélange au moins une partie du gaz de tête réchauffé dans le premier échangeur avec le gaz contenant du dioxyde de carbone en amont du premier échangeur.
- on réchauffe un gaz d'un des séparateurs de phases dans le premier échangeur et on le détend dans une turbine.
- le gaz provient d'une chaudière d'oxycombustion et le liquide de cuve de la colonne d'élimination de NOₓ est renvoyé à la chaudière.

Selon un autre objet de l'invention, il est prévu un appareil de séparation d'un gaz contenant au moins 50% de dioxyde de carbone dioxyde de carbone par distillation selon la revendication 4. Selon d'autres objets facultatifs, l'appareil comprend :
- des moyens de mélanger d'au moins une partie du gaz de tête réchauffé dans le premier échangeur avec le gaz contenant du dioxyde de carbone en amont du premier échangeur (par exemple deux conduites qui se rejoignent).
- une conduite pour envoyer un gaz d'un des séparateur de phases se réchauffer dans le premier échangeur, une turbine et une conduite pour envoyer le gaz réchauffé à la turbine.
- une turbine de détente pour un gaz provenant d'un séparateur de phases.

Selon un autre objet de l'invention, il est prévu un appareil d'oxycombustion comprenant une chaudière d'oxycombustion, une conduite pour envoyer un gaz de la chaudière à un appareil selon l'une des revendications 4 à 6 et une conduite pour envoyer le liquide de cuve de la colonne d'élimination de NOx vers la chaudière.

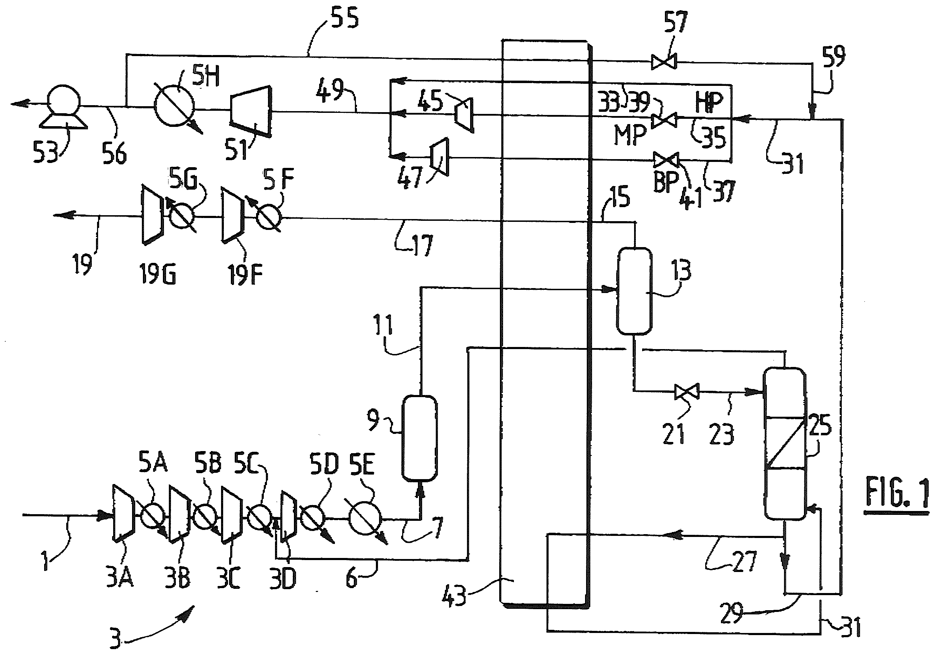

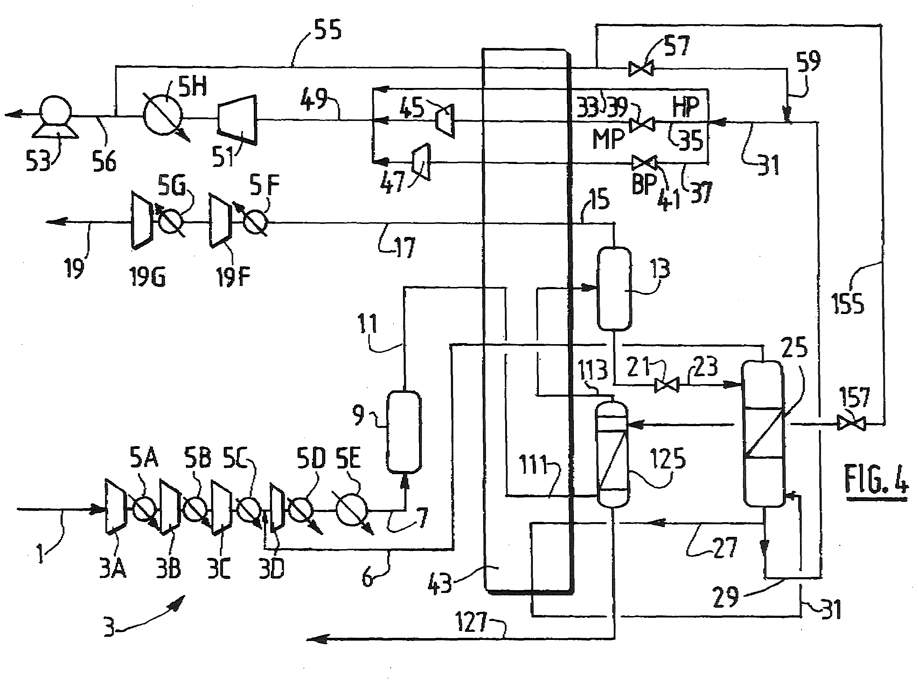

L'invention sera décrite en plus de détail en se référant aux figures 1 à 3 qui représentent des appareils comparatifs et la Figure 4 qui représente un appareil selon l'invention.

Dans toutes ces figures, la colonne de séparation de dioxyde de carbone et d'oxygène ou de monoxyde de carbone ne contient pas de rebouilleur de cuve, le liquide de cuve étant vaporisé uniquement dans l'échangeur principal de l'appareil où se réchauffe le gaz de tête de la colonne de distillation.

Dans la Figure 1, un gaz humide 1 contenant du dioxyde de carbone et de l'oxygène ou du monoxyde de carbone est comprimé dans un compresseur 3. Ce compresseur 3 comprend quatre étages 3A, 3B, 3C, 3D, chacun étant suivi par un moyen de refroidissement 5A, 5B, 5C, 5D. Après refroidissement dans le moyen de refroidissement 5D, le gaz 1 est refroidi par le refroidisseur 5 E pour former le gaz 7 et envoyé dans une unité d'épuration 9 pour enlever l'humidité. Le gaz sec formé 11 est refroidi dans un premier échangeur 43 où il se refroidit et est partiellement condensé. Le gaz partiellement condensé est envoyé à un séparateur de phases 13. Le liquide du séparateur de phases 13 est envoyé à une vanne 21 pour former le liquide 23 qui alimente la colonne de distillation 25 en tête.

Un gaz enrichi en oxygène et/ou monoxyde de carbone 6 est soutiré de la tête de la colonne et envoyé en amont du refroidisseur 5D. Alternativement il peut être renvoyé à l'unité d'oxycombustion dont provient le gaz 1.

Le liquide de cuve 27 de la colonne 25, riche en dioxyde de carbone, est envoyé au premier échangeur 43 où il est vaporisé pour former le débit 31 qui est renvoyé en cuve de la colonne 25 après détente dans une vanne. Le reste du liquide de cuve 29 n'est pas chauffé dans l'échangeur mais est mélangé avec un fluide de cycle 59. Le mélange formé 31 est divisé en trois parties. La partie 37 est détendue par la vanne 41 à une basse pression, vaporisée dans le premier échangeur 43 et puis comprimée dans un compresseur 47. La partie 35 est détendue par la vanne 39 à une moyenne pression, vaporisée dans le premier échangeur 43 et puis comprimée par un compresseur 45. La partie 33 est vaporisée dans le premier échangeur 43 sans avoir été détendue et puis mélangée avec les deux parties comprimées. Le mélange 49 ainsi formé est comprimé dans un compresseur 51, condensé par 5H puis divisé en deux. Une partie 56 est pressurisée par une pompe 53 pour former un produit liquide. Le reste 55 se refroidit dans le premier échangeur 43, est détendu dans la vanne 57 et mélangé avec le débit 29 pour être renvoyé au premier échangeur 43, en cycle de réfrigération.

Le gaz 15 du séparateur de phases 13 se réchauffe dans le premier échangeur 43 pour former un débit 17 qui est réchauffé par les réchauffeurs 5F, 5G et détendu par deux turbines 19F, 19G en série pour former le débit détendu 19.

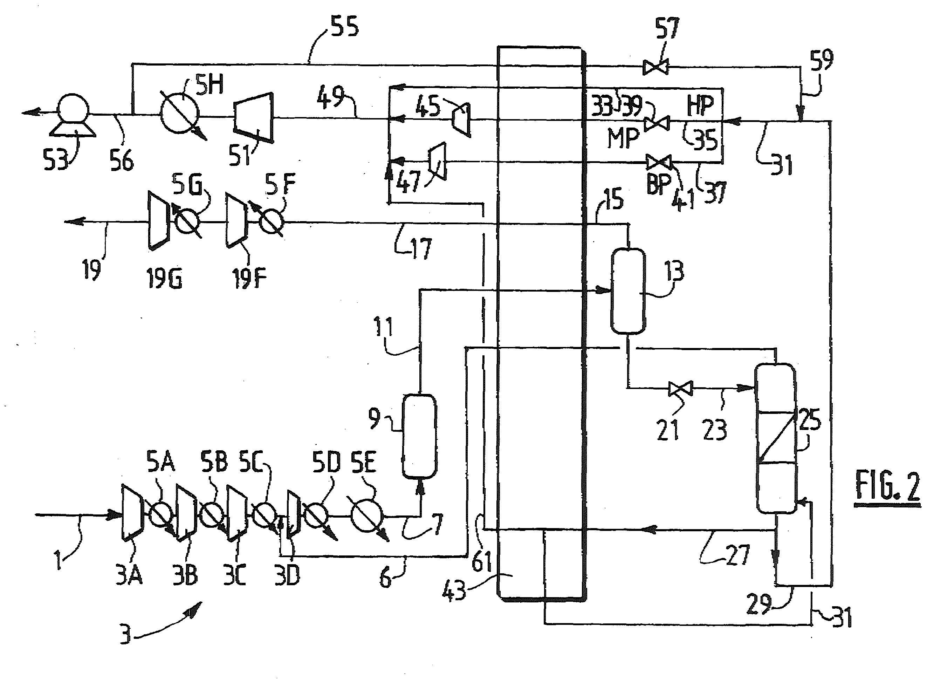

Dans la Figure 2, à la différence de la Figure 1, une partie 61 du liquide de cuve 27 se vaporise et se réchauffe en traversant entièrement le premier échangeur 43 pour être envoyée en aval du compresseur 47 comme débit 61 qui est envoyé en aval du compresseur 47. Cette variante présente un intérêt particulier car cela évite de sous-refroidir le liquide qui est vaporisé à la pression de la colonne (en particulier si le fluide 33 est réduit à zéro, cela va donc soulager le bout froid de l'échangeur et améliorer l'énergie de liquéfaction. En effet, le sous-refroidissement ne se justifie que lorsque l'on détend le liquide car alors on réduit la portion transformée en vapeur, voire on la supprime.

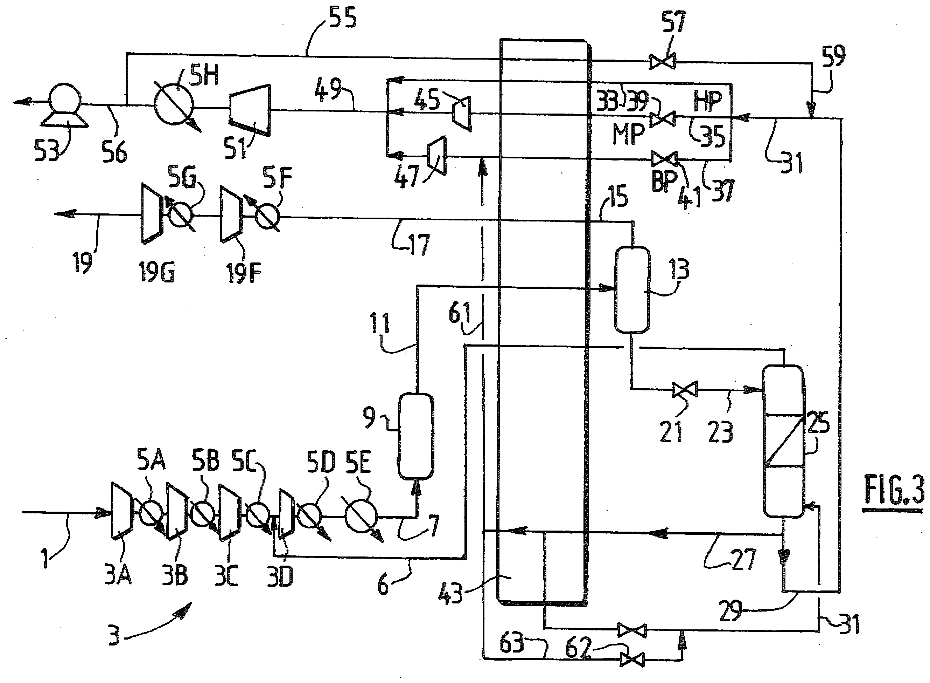

Dans la Figure 3, à la différence de la Figure 2, une partie 63 du liquide vaporisé 61 est renvoyée à la cuve de la colonne 25 sans avoir été refroidie dans l'échangeur 43 mais après détente dans une vanne 62. Cette variante présente un intérêt particulier pour contrôler la température du gaz de rebouillage.

Il est également possible de diviser le liquide de cuve 27 en au moins deux parties, une étant vaporisée dans l'échangeur 43 puis renvoyée à la colonne 25 et une autre partie, éventuellement le reste, étant traitée dans une deuxième colonne de distillation pour produire un produit riche en dioxyde de carbone.

La Figure 4 montre le cas où le procédé permet d'épurer le mélange en NO avec une colonne dédiée 125 en amont de la séparation dans la colonne 25. La colonne dédiée 125 est une colonne d'élimination de NOₓ. Une colonne d'élimination de NOx permet de réduire la teneur en NO et/ou NO₂ et/ou N₂O du gaz rentrant la colonne. Le gaz humide 1 contenant du dioxyde de carbone et de l'oxygène ou du monoxyde de carbone est comprimé dans un compresseur 3. Ce compresseur 3 comprend quatre étages 3A, 3B, 3C, 3D, chacun étant suivi par un moyen de refroidissement 5A, 5B, 5C, 5D. Après refroidissement dans le moyen de refroidissement 5D, le gaz 1 est refroidi par le refroidisseur 5 E pour former le gaz 7 et envoyé dans une unité d'épuration 9 pour enlever l'humidité. Le gaz sec formé 11 est refroidi dans un premier échangeur 43 et puis soutiré à un niveau intermédiaire de l'échangeur 43 pour être envoyé par la conduit 111 en cuve de la colonne 125. La colonne 125 est une simple colonne sans rebouilleur de cuve ou condenseur de tête. Elle sert de colonne d'épuisement pour épurer le gaz 11 en NOₓ. Un liquide enrichi en NO 127 est soutiré en cuve de la colonne 125 et est envoyé vers la chaudière qui est la source du gaz 1 ou sinon stocké. Le gaz épuré en NOₓ 113 sort de la tête de la colonne 125, se refroidit dans l'échangeur 43 et est partiellement condensé. Le gaz partiellement condensé est envoyé à un séparateur de phases 13. Le liquide du séparateur de phases 13 est envoyé à une vanne 21 pour former le liquide 23 qui alimente la colonne de distillation 25 en tête.

Un gaz enrichi en oxygène et/ou monoxyde de carbone 26 est soutiré de la tête de la colonne et envoyé en amont du refroidisseur 5D. Alternativement il peut être renvoyé à l'unité d'oxycombustion dont provient le gaz 1. Ce gaz peut être séparé par perméation ou d'autres moyens pour former un autre gaz qui sera réchauffé.

Le liquide de cuve 27 de la colonne 25, riche en dioxyde de carbone, est envoyé au premier échangeur 43 où il est vaporisé pour former le débit 31 qui est renvoyé en cuve de la colonne 25 après détente dans la vanne 32.

Une partie du liquide de cuve 29 est mélangée avec le fluide 50 puis divisée en trois parties. La partie 37 est détendue par la vanne 41 à une basse pression, vaporisée dans le premier échangeur 43 et puis comprimée dans un compresseur 47. La partie 35 est détendue par la vanne 39 à une moyenne pression, vaporisée dans le premier échangeur 43 et puis comprimée par un compresseur 45. La partie 33 est vaporisée dans le premier échangeur 43 sans avoir été détendue et puis mélangé avec les deux parties comprimées. Le mélange 49 ainsi formé est comprimé dans un compresseur 51, condensé puis divisé en deux. Une partie 56 est pressurisée par une pompe 53 pour former un produit liquide. Le reste 55 se refroidit dans le premier échangeur 43 puis est divisé en deux. Une partie 59 est détendue dans la vanne 57 et mélangée avec le débit 29 pour être renvoyée au premier échangeur 43, en cycle de réfrigération.

Une autre partie 155 est détendue dans une vanne 157 puis envoyée en tête de la colonne d'élimination de NOₓ 125 sous forme liquide.

Le gaz du séparateur de phases 13 se réchauffe dans le premier échangeur 43 pour former un débit 17 qui est réchauffé par les réchauffeurs 5F, 5G et détendu par deux turbines 19F, 19G en série pour former le débit détendu 19.

## Revendications

1. Procédé de séparation d'un gaz contenant du dioxyde de carbone par distillation dans lequel :
i) on refroidit le gaz contenant au moins 50% de dioxyde de carbone, dans un premier échangeur (43) pour produire un fluide refroidi (113), on envoie un liquide (23) dérivé du fluide refroidi à une colonne de distillation (25) pour y être séparé,
ii) on soutire un gaz de tête (6) de la colonne de distillation et on réchauffe le gaz de tête ou un gaz dérivé du gaz de tête dans le premier échangeur,
iii) on soutire de la colonne de distillation un liquide de cuve (27) enrichi en dioxyde de carbone par rapport au gaz contenant au moins 50% de dioxyde de carbone et on en réchauffe au moins une partie dans le premier échangeur,
iv) on vaporise au moins une première partie du liquide de cuve dans le premier échangeur pour produire une partie vaporisée et on renvoie la partie vaporisée (31) à la colonne,
v) on envoie une deuxième partie du liquide de cuve au premier échangeur où elle se réchauffe et se vaporise et on comprime le gaz ainsi formé (61) pour former un produit gazeux (49) riche en dioxyde de carbone,
vi) on refroidit et éventuellement on condense une partie du gaz comprimé formant un gaz de cycle, on le refroidit ensuite dans le premier échangeur (43) formant un gaz de cycle liquéfié, on en détend au moins une partie et on le renvoie se vaporiser dans le premier échangeur pour former un cycle de réfrigération, et
vii) on dérive le liquide du fluide refroidi en envoyant le fluide refroidi (111) à une colonne d'élimination de NOₓ, (125), en prenant le gaz de tête (113) de la colonne d'élimination et en l'envoyant à au moins un séparateur de phases (13) et en prenant le liquide dérivé du fluide refroidi (23) dans un des séparateurs de phase **caractérisé en ce que** la colonne d'élimination de NOₓ est une colonne d'épuisement (25), alimentée en tête par du gaz de cycle liquéfié (155).

2. Procédé selon la revendication 1 dans lequel on mélange au moins une partie du gaz de tête réchauffé (6) de la colonne de distillation dans le premier échangeur (43) avec le gaz contenant du dioxyde de carbone (1) en amont du premier échangeur.

3. Procédé selon la revendication 1 dans lequel le gaz provient d'une chaudière d'oxycombustion et le liquide (127) de cuve de la colonne d'élimination de NOx (125) est renvoyé à la chaudière.

4. Appareil de séparation d'un gaz contenant au moins 50% de dioxyde de carbone dioxyde de carbone par distillation comprenant un premier échangeur (43) pour refroidir le gaz pour produire un fluide refroidi, des moyens (13, 125) pour dériver un liquide du fluide refroidi, une colonne de distillation (25), une conduite pour envoyer le liquide dérivé du fluide refroidi vers la colonne, une conduite de gaz de tête pour soutirer un gaz de tête (6) de la colonne de distillation, la conduite de gaz de tête étant reliée au premier échangeur pour réchauffer le gaz de tête ou un gaz dérivé du gaz de tête dans le premier échangeur, une conduite de liquide pour soutirer de la colonne de distillation un liquide de cuve (27) enrichi en dioxyde de carbone par rapport au gaz, la conduite de liquide étant reliée au premier échangeur pour réchauffer le liquide dans le premier échangeur, une conduite reliée au premier échangeur et à la colonne pour renvoyer le liquide vaporisé (31) à la colonne de distillation, une conduite pour envoyer une deuxième partie (29) du liquide de cuve au premier échangeur où elle se réchauffe et se vaporise, un compresseur (45, 47, 51) pour comprimer le gaz ainsi formé pour former un produit gazeux (49) riche en dioxyde de carbone, des moyens (55) pour refroidir et éventuellement condenser une partie du gaz comprimé formant un gaz de cycle, des moyens pour envoyer la partie de gaz comprimé refroidi au premier échangeur (43) formant un gaz de cycle liquéfié, des moyens de détente (57) pour en détendre au moins une partie du gaz comprimé refroidi et liquéfié et pour la renvoyer se vaporiser dans le premier échangeur pour former un cycle de réfrigération, une colonne d'élimination de NOₓ (125), une conduite pour envoyer le fluide refroidi (111) à la colonne d'élimination de NOₓ, le moyen pour dériver un liquide étant constitué par au moins un séparateur de phases (13), une conduite pour soutirer un gaz de tête (113) de la colonne d'élimination de NOₓ et pour l'envoyer à l'au moins un séparateur de phases (13), une conduite pour sortir le liquide dérivé du fluide refroidi (23) d'un des séparateurs de phase **caractérisé en ce que** la colonne d'élimination de NOₓ est une colonne d'épuisement (25) et **en ce que** l'appareil comprend une conduite pour alimenter la colonne d'épuisement en tête par du gaz de cycle liquéfié (155).

5. Appareil selon la revendication 4 comprenant des moyens de mélanger d'au moins une partie du gaz de tête réchauffé (6) dans le premier échangeur (43) avec le gaz contenant du dioxyde de carbone (1) en amont du premier échangeur.

6. Appareil selon l'une des revendications 4 ou 5 comprenant une conduite pour envoyer un gaz (15, 17) d'un des séparateur de phases (13) se réchauffer dans le premier échangeur, une turbine (19F, 19G) et une conduite pour envoyer le gaz réchauffé à la turbine.

7. Appareil d'oxycombustion comprenant une chaudière d'oxycombustion, une conduite pour envoyer un gaz de la chaudière à un appareil selon l'une des revendications 4 à 6 et une conduite pour envoyer le liquide (127) de cuve de la colonne d'élimination de NOₓ vers la chaudière.

## Patentansprüche

1. Verfahren zur Trennung eines Gases, umfassend Kohlendioxid, zur Destillation, wobei:
i) das Gas, enthaltend mindestens 50% Kohlendioxid, in einem ersten Tauscher (43) gekühlt wird, um ein gekühltes Fluid (113) herzustellen, eine Flüssigkeit (23), die vom gekühlten Fluid abgeleitet wird, an eine Destillationssäule (25) geschickt wird, um dort getrennt zu werden,
ii) ein Kopfgas (6) von der Destillationssäule entnommen wird und das Kopfgas oder ein Gas, das vom Kopfgas abgeleitet wird, im ersten Tauscher erhitzt wird,
iii) von der Destillationssäule wird eine Sumpfflüssigkeit (27), angereichert mit Kohlendioxid mit Bezug auf das Gas, enthaltend mindestens 50% Kohlendioxid, entnommen und davon mindestens ein Teil im ersten Tauscher erhitzt wird,
iv) mindestens ein erster Teil der Sumpfflüssigkeit im ersten Tauscher verdampft wird, um einen verdampften Teil zu erzeugen, und der verdampfte Teil (31) an die Säule zurückgeschickt wird,
v) ein zweiter Teil der Sumpfflüssigkeit an den ersten Tauscher geschickt wird, wo er erhitzt und verdampft wird, und das so gebildete Gas (61) komprimiert wird, um ein gasförmiges Produkt (49) reich an Kohlendioxid zu bilden,
vi) ein Teil des komprimierten Gases, der ein Zyklusgas bildet, gekühlt und eventuell kondensiert wird, er dann im ersten Tauscher (43) gekühlt wird und verflüssigtes Zyklusgas bildet, wobei davon mindestens ein Teil mindestens ein Teil ausgedehnt wird, und er zum Verdampfen in den ersten Tauscher zurückgeschickt wird, um einen Kühlzyklus zu bilden, und
vii)die Flüssigkeit des gekühlten Fluids abgeleitet wird, indem das gekühlte Fluid (111) an eine Säule zur Elimination von NOₓ, (125) geschickt wird, indem das Kopfgas (113) der Säule zur Elimination genommen und an mindestens einen Phasentrenner (13) geschickt wird, und indem die Flüssigkeit, abgeleitet vom gekühlten Fluid (23) in einem der Phasentrenner genommen wird, **dadurch gekennzeichnet, dass** die Säule zur Elimination von NOₓ eine Abstreifsäule (25) ist, die am Kopf durch Gas des verflüssigten Zyklus (155) versorgt wird.

2. Verfahren nach Anspruch 1, wobei mindestens ein Teil des erhitzten Kopfgases (6) der Destillationssäule im ersten Tauscher (43) mit dem Gas, enthaltend Kohlendioxid (1) vorgelagert vom ersten Tauscher gemischt wird.

3. Verfahren nach Anspruch 1, wobei das Gas, das aus einem Oxykombustionskessel stammt, und die Sumpfflüssigkeit (127) der Säule zur Elimination von NOₓ (125) an den Kessel zurückgeschickt wird.

4. Vorrichtung zum Trennen eines Gases, enthaltend mindestens 50% Kohlendioxid, durch Destillation, umfassend einen ersten Tauscher (43), um das Gas zu kühlen, um ein gekühltes Fluid zu erzeugen, Mittel (13, 125), um eine Flüssigkeit vom gekühlten Fluid abzuleiten, und eine Destillationssäule (25), eine Leitung, um die Flüssigkeit, abgeleitet vom gekühlten Fluid, an die Säule zu schicken, eine Kopfgasleitung, um Kopfgas (6) von der Destillationssäule zu entnehmen, wobei die Kopfgasleitung mit dem ersten Tauscher verbunden ist, um das Kopfgas oder ein Gas, abgeleitet vom Kopfgas, im ersten Tauscher zu erhitzen, eine Flüssigkeitsleitung, um von der Destillationssäule eine Sumpfflüssigkeit (27) zu entnehmen, angereichert mit Kohlendioxid mit Bezug auf das Gas, wobei die Kopfgasleitung mit dem ersten Tauscher verbunden ist, um die Flüssigkeit im ersten Tauscher zu erhitzen, eine Leitung, die mit dem ersten Tauscher und mit der Säule verbunden ist, um die verdampfte Flüssigkeit (31) an die Destillationssäule zurückzuschicken, eine Leitung, um einen zweiten Teil (29) der Sumpfflüssigkeit an den ersten Tauscher zu schicken, wo er erhitzt und verdampft wird, einen Kompressor (45, 47, 51), um das so gebildete Gas zu komprimieren, um ein gasförmiges Produkt (49) reich an Kohlendioxid zu bilden, Mittel (55), um einen Teil des komprimierten Gases zu kühlen und eventuell zu kondensieren, das ein Zyklusgas bildet, Mittel, um den Teil des gekühlten komprimierten Gases an den ersten Tauscher (43) zu schicken, das ein verflüssigtes Zyklusgas bildet, Mittel zum Ausdehnen (57), um mindestens einen Teil des gekühlten und verflüssigten komprimierten Gases auszudehnen, und um ihn zum Verdampfen in den ersten Tauscher zurückzuschicken, um einen Kühlzyklus zu bilden, eine Säule zur Elimination von NOₓ (125), eine Leitung, um die gekühlte Flüssigkeit (111) an die Säule zur Elimination von NOₓ zu schicken, wobei das Mittel, um eine Flüssigkeit zu entnehmen, aus mindestens einem Phasentrenner (13) besteht, einer Leitung, um ein Kopfgas (113) aus der Säule zur Elimination von NOₓ zu entnehmen, und um es mindestens an einen Phasentrenner (13) zu schicken, eine Leitung, um die Flüssigkeit, abgeleitet vom gekühlten Fluid (23) von einem der Phasentrenner zu entfernen, **dadurch gekennzeichnet, dass** die Säule zur Elimination von NOₓ eine Abstreifsäule (25) ist, und dadurch, dass die Vorrichtung eine Leitung umfasst, um die Abstreifsäule am Kopf am Kopf mit verflüssigtem Zyklusgas (155) zu versorgen.

5. Vorrichtung nach Anspruch 4, umfassend Mittel zum Mischen von mindestens einem Teil des erhitzten Kopfgases (6) im ersten Tauscher (43) mit dem Gas, enthaltend Kohlendioxid (1) vorgelagert vom ersten Tauscher.

6. Vorrichtung nach einem der Ansprüche 4 oder 5, umfassend eine Leitung, um ein Gas (15, 17) von einem der Phasentrenner (13) zum Erhitzen im ersten Tauscher zu schicken, eine Turbine (19F, 19G) und eine Leitung, um das erhitzte Gas an die Turbine zu schicken.

7. Vorrichtung zur Oxykombustion, umfassend einen Oxykombustionskessel, eine Leitung, um ein Gas vom Kessel an eine Vorrichtung nach einem der Ansprüche 4 bis 6 zu schicken, und eine Leitung, um die Sumpfflüssigkeit (127) der Säule zur Elimination von NOₓ an den Kessel zu schicken.

## Claims

1. Method for separating a gas containing carbon dioxide by means of distillation wherein:
i) the gas containing at least 50% of carbon dioxide is cooled in a first exchanger (43) so as to produce a cooled fluid (113), a liquid (23) derived from the cooled fluid is sent to a distillation column (25) to be separated therein,
ii) a head gas (6) is withdrawn from the distillation column and the head gas or a gas derived from the head gas is heated in the first exchanger,
iii) a tank liquid (27), which is richer in carbon dioxide than the gas containing at least 50% of carbon dioxide is withdrawn from the distillation column and at least a portion thereof is heated in the first exchanger,
iv) at least a first portion of the tank liquid is vaporized in the first exchanger in order to produce a vaporised portion and the vaporised portion (31) is sent back to the column,
v) a second portion of the tank liquid is sent to the first exchanger where it is heated and vaporised and the gas (61) formed as such is compressed in order to form a gaseous product (49) rich in carbon dioxide,
vi) a portion of the compressed gas forming a cycle gas is cooled and possibly condensed, it is then cooled in the first exchanger (43) forming a liquefied cycle gas, at least one portion of it is expanded and it is sent back to be vaporised in the first exchanger in order to form a refrigeration cycle, and
vii) the liquid is derived from the cooled fluid by sending the cooled fluid (111) to a NOₓ removal column (125), by taking the head gas (113) from the removal column and by sending it to at least one phase separator (13) and by taking the liquid derived from the cooled fluid (23) in one of the phase separators **characterised in that** the NOₓ removal column is a stripping column (25), supplied at the head with liquefied cycle gas (155).

2. Method according to claim 1 wherein at least a portion of the heated head gas (6) from the distillation column in the first exchanger (43) is mixed with the gas containing carbon dioxide (1) upstream of the first exchanger.

3. Method according to claim 1 wherein the gas comes from an oxycombustion boiler and the tank liquid (127) from the NOₓ removal column (125) is sent back to the boiler.

4. Device for separating a gas containing at least 50% of carbon dioxide by means of distillation comprising a first exchanger (43) in order to cool the gas so as to produce a cooled fluid, means (13, 125) for deriving a liquid from the cooled fluid, a distillation column (25), a duct for sending the liquid derived from the cooled fluid to the column, a head gas duct for withdrawing a head gas (6) from the distillation column, with the head gas duct being connected to the first exchanger in order to heat the head gas or a gas derived from the head gas in the first exchanger, a liquid duct for withdrawing from the distillation column a tank liquid (27) which is richer in carbon dioxide than the gas, with the liquid duct being connected to the first exchanger in order to heat the liquid in the first exchanger, a duct connected to the first exchanger and to the column in order to send the vaporised liquid (31) back to the distillation column, a duct for sending a second portion (29) of the tank liquid to the first exchanger where it is heated and is vaporised, a compressor (45, 47, 51) for compressing the gas formed as such in order to form a gaseous product (49) rich in carbon dioxide, means (55) for cooling and possibly condensing a portion of the compressed gas forming a cycle gas, means for sending the portion of the cooled condensed gas to the first exchanger (43) forming a liquefied cycle gas, means for expanding (57) in order to expand at least one portion of the compressed cooled and liquefied gas and for sending it to be vaporised in the first exchanger in order to form a refrigeration cycle, a NOₓ removal column (125), a duct for sending the cooled fluid (111) to the NOₓ removal column, with the means for deriving a liquid being comprised of at least one phase separator (13), a duct for withdrawing a head gas (113) from the NOₓ removal column and for sending it to at least one phase separator (13), a duct for removing the liquid derived from the cooled fluid (23) from one of the phase separators **characterised in that** the NOₓ removal column is a stripping column (25) and **in that** the device comprises a duct in order to supply the stripping column at the head with liquefied cycle gas (155).

5. Device according to claim 4 comprising means for mixing at least one portion of the heated head gas (6) in the first exchanger (43) with the gas containing carbon dioxide (1) upstream of the first exchanger.

6. Device according to one of claims 4 or 5 comprising a duct for sending a gas (15, 17) from one of the phase separators (13) to be heated in the first exchanger, a turbine (19F, 19G) and a duct for sending the heated gas to the turbine.

7. Device for oxycombustion comprising an oxycombustion boiler, a duct for sending a gas from the boiler to a device according to one of claims 4 to 6 and a duct for sending the tank liquid (127) from the NOₓ removal column to the boiler.
